# EUROPEAN PATENT SPECIFICATION

(11) **EP 0 696 244 B1**
(45) Date of publication and mention of the grant of the patent: **13.09.2000**
(21) Application number: 94915920.6
(22) Date of filing: 28.04.1994
(51) Int. Cl.: B32B 27/00, C08J 7/04, C09D 123/08, B32B 27/32

(54) **COATED FILMS WITH GOOD LOW TEMPERATURE SEALING PROPERTIES AND HOT TACK**
BESCHICHTETE FOLIEN MIT GUTEN KALTSIEGELEIGENSCHAFTEN UND HEISSKLEBRIGKEIT
FILMS ENDUITS PRESENTANT DE BONNES PROPRIETES DE SOUDAGE A BASSE TEMPERATURE ET COLLANTS A CHAUD

(30) Priority: 30.04.1993 US 54991
(43) Date of publication of application: 14.02.1996
(73) Proprietor: MOBIL OIL CORPORATION, Fairfax, Virginia 22037-0001 (US)
(72) Inventor: TOUHSAENT, Robert, Edward, Fairport, NY 14450 (US)
(74) Representative: Lawrence, Peter Robin Broughton
(86) International application number: PCT/US94/04654
(87) International publication number: WO 94/25270

(56) References cited:
- EP-A- 0 224 862
- EP-A- 0 529 828
- DE-A- 1 925 091
- FR-A- 2 355 655
- US-A- 3 753 769
- US-A- 5 066 543
- US-A- 5 126 198
- US-A- 5 169 728
- US-A- 5 178 942
- DATABASE WPI Section Ch, Week 9345 Derwent Publications Ltd., London, GB; Class A89, AN 93-354184 & JP-A-05 257 233 ( OJI PAPER CO) , 8 October 1993
- DATABASE WPI Section Ch, Week 8128 Derwent Publications Ltd., London, GB; Class A82, AN 81-50650D & JP-A-56 059 880 ( NIPPON OIL KK) , 23 May 1981

## Description

This invention relates to novel coated films such as oriented polypropylene having good hot tack, and low blocking, together with satisfactory low temperature sealing and other properties.

Coatings comprising copolymers of ethylene and acrylic acid (EAA) have advantages over various previously used coatings, such as good low temperature sealing properties, water immersible seals, and resistance to crazing when flexed.

GB-A-1243303 discloses an aqueous dispersion of an ethylene/α-β ethylenically unsaturated carboxylic acid copolymer wherein part of the acid groups thereof are neutralised, and at least one polymeric coalescing aid. When the dispersion is applied as a coating to a substrate, the resulting film is substantially free of pinholes and mudcracking due to the presence in the dispersion of the polymeric coalescing aid.

JP-A-56059880 is directed towards a protective temporary coating composition which comprises a wax, an emulsifier, a polymer of a monomer containing (meth) acrylic acid or its ester, and a white micropowder. The polymer is preferably an ionomer produced by modifying olefin-acrylic acid copolymer with metal (ions).

However, when these coatings are applied to the sealable side of a base polymer film such as oriented polypropylene (OPP), it has been found in some instances that it would be desirable to have improved hot tack and blocking properties, particularly when the coated film is utilized on a relatively high speed packaging machine. Thus, any means to accomplish the foregoing improvements would be beneficial.

In accordance with the present invention, there is provided a base polymer film coated with a composition comprising an ethylene copolymer comprising 65 to 95 wt.% ethylene and 5 to 35 wt.% of acrylic or methacrylic acid based on the weight of the polymer, wherein 2 to 80% of the carboxylate groups are neutralised with metal ions from Groups Ia, IIa, or IIb of the Periodic Table, and microcrystalline wax and/or fumed silica.

Suitably, the copolymer is coated directly onto the base polymer film.

It has been found that the foregoing coated film wherein the base polymer film is, for example, oriented polypropylene, provides for good hot tack and blocking properties accompanied by satisfactory low temperature sealing and resistance of the seal to immersion in water.

The ethylene copolymer utilized in the compositions of this invention is a copolymer of 65 to 95 wt.%, preferably 75 to 85 wt.% of ethylene, and 5 to 35 wt.%, preferably 15 to 25 wt.% of acrylic acid (AA) or methacrylic acid (MA). The copolymer may have a number average molecular weight (Mn) of 2,000 to 50,000, preferably 4,000 to 10,000.

The ethylene copolymer is often supplied as a solution or fine dispersion of an ammonium salt of the copolymer in an ammoniacal water solution. When the copolymer is dried, ammonia is given off and the ionized and water sensitive carboxylate groups are converted to largely unionized and less water sensitive free carboxyl groups. In practicing this invention, however, there is added to the solution or dispersion of the ethylene copolymer an amount of ions of at least one metal from Group Ia, IIa or IIb of the Periodic Table, preferably, sodium, potassium, lithium, calcium or zinc ions, and most preferably sodium ions, e.g., in the form of their hydroxides. The quantity of such metallic ions may be sufficient to neutralize 2 to 80%, preferably 10 to 50% of the total carboxylate groups in the copolymer. The presence of such metallic ions has been found to result in an improvement in certain properties, e.g., coefficient of friction (COF), hot tack, and blocking, without an unacceptable sacrifice of other properties, e.g., low minimum seal temperatures (MST).

When the ethylene copolymer is a copolymer of 80 wt.% of ethylene and 20 wt.% of acrylic acid and the neutralizing metal ions are sodium ions added as sodium hydroxide, then the amount of sodium hydroxide added corresponding to the foregoing percentages of carboxylate groups neutralized, is 0.33 to 8.8 phr, preferably 1.1 to 5.5 phr, where "phr" stands for parts by weight per hundred parts of the total resin, which is the same as ethylene copolymer when no other resin is present. For the purpose of determining the phr of various additives present in the coating, all the carboxylate groups of the ethylene copolymer are assumed to be in their free carboxyl (-COOH) form.

In addition to the partially neutralized ethylene copolymer, the coatings of this invention preferably contain a relatively large particle size microcrystalline wax as an anti-blocking agent. The microcrystalline wax may be present in the coating in an amount of 2 to 12 phr, preferably 3 to 5 phr, wherein the wax particles have an average size in the range of 0.1 to 0.6 µm, preferably 0.12 to 0.30 µm.

In addition to functioning as an anti-blocking material, the microcrystalline wax when incorporated into the coatings of the present invention also functions to improve the "cold-slip" properties of the films coated therewith, i.e., the ability of a film to satisfactorily slide across surfaces at about room temperatures.

The coatings of this invention also optionally contain fumed silica for the purpose of further reducing the tack of the coating at room temperature. The fumed silica is composed of particles which are agglomerations of smaller particles and which have an average particle size of 2 to 9 µm, preferably 3 to 5 µm. and is present in the coating in an amount of 0.1 to 2.0 phr, preferably 0.2 to 0.4 phr.

Other optional additives which can be used, include particulate materials such as talc which may be present in an amount of 0 to 2 phr, cross-linking agents such as melamine formaldehyde resins which may be present in an amount of 0 to 20 phr, and anti-static agents such as poly(oxyethylene) sorbitan monooleate which may be present in an amount of 0 to 6 phr.

A particular type of thermoplastic film which can be advantageously coated with the coating compositions of this invention is molecularly oriented, isotactic polypropylene. After extrusion of the base polypropylene film utilizing conventional extrusion techniques, the film is heated and molecularly oriented by stretching it both a longitudinal and transverse direction. The resultant oriented film exhibits greatly improved tensile and stiffness properties. However, it is difficult to heat seal by conventional techniques because at the requisite sealing temperature, i.e., on the order of about 176.7°C (350°F), film disorientation and shrinkage occur which can result in the film rupturing and tearing apart. An advantage of this invention when such oriented films are subjected to surface treatment as described hereinafter and subsequently coated with the present coating compositions is that they can be sealed by temperatures sufficiently low to prevent shrinkage of the substrate, i.e., the oriented polypropylene film.

The foregoing description of base films containing a major proportion of polypropylene is intended to include not only films wherein the polymer is composed entirely of isotactic polypropylene homopolymer, but also coextruded multilayer films wherein the polymer of at least one layer is isotactic polypropylene homopolymer, and the polymer of one or both outer layers is a polymer, preferably an olefin polymer, having better sealability than isotactic polypropylene homopolymer. Such surface layer polymer may be a copolymer of propylene with a minor amount of one or more other 1-olefins, e.g., ethylene or ethylene and butylene or a high density polyethylene.

Other base polymer films which may be coated in accordance with this invention are those composed of polyolefins other than polypropylene, e.g., polyethylene and those composed of non-hydrocarbon polymers, e.g., polyesters such as polyethylene terephthalate (PET) and polyamides (nylons).

In general, the uncoated substrate films employed in the practice of the present invention are usually from 1.27 × 10⁻⁵ to 5.08 × 10⁻⁵ m (0.5 to 3.0 mils)in thickness. Of particular interest are coextruded three layer films wherein the polymer of the central core layer is isotactic polypropylene homopolymer having a thickness of 70 to 98% of the total thickness of the film, the remainder being two thin outer layers of substantially identical thickness wherein the polymer is an isotactic copolymer of propylene, ethylene in an amount of 1 to 5 wt.% of the copolymer, and optionally, butylene in an amount of 0.5 to 2 wt.% of the copolymer. Also of substantial interest is a coextruded five layer film wherein the polymer of the central core layer is an opaque isotactic polypropylene homopolymer with voids produced by stretch orienting such layer containing spherical particles of a material higher melting than and immiscible with isotactic polypropylene homopolymer, e.g., polybutylene terephthalate, as shown in U.S. Patents Nos. 4,632,869 and 4,720,416, such core layer having a thickness of 70 to 90% the total thickness of the film; the polymer of the layers contiguous to the central core layer is isotactic polypropylene homopolymer without voids, the thickness of such layers being substantially the same and being 2 to 10% of the total thickness of the film; and the polymer of the outer layers is a copolymer of propylene, ethylene and optionally, butylene, as described previously in connection with three layer films, each outer layer having substantially the same thickness, which is 1 to 5% of the total thickness of the film.

The coatings of this invention are particularly useful when applied to thicker films, e.g., of 2.54 × 10⁻⁵ to 5.08 × 10⁻⁵m (1 to 2 mils), within the foregoing range, intended to be fed to a relatively high speed horizontal form fill and seal (HFFS) packaging machine operating at a speed of 125 to 200 feet per minute (fpm). For this purpose, the percentage of carboxylate groups in the ethylene copolymer which should be neutralized, e.g., with sodium, should be in the range of 2.7 to 27%, preferably about 13.5% to prevent the film from failing in packaging operation due to low hot tack, high blocking, and high coefficient of friction (COF). When the ethylene copolymer is composed of 80 wt.% of ethylene and 20 wt.% of acrylic acid, the amount of sodium hydroxide to be added to the ethylene copolymer corresponding to the foregoing range is 0.3 to 3.0 phr, preferably 1.5 phr.

When the coated film is fed to a vertical form fill and seal (VFFS) packaging machine which operates at a somewhat lower speed than a HFFS machine, e.g., 7.62 to 22.86 mpm (25 to 75 fpm), the percentage of carboxylate groups in the ethylene copolymer which should be neutralized may be somewhat higher than when the film is fed to a HFFS machine, e.g., 18 to 45%, preferably about 31.5%, corresponding to an amount of sodium hydroxide added to the ethylene copolymer of 2 to 5 phr, preferably about 3.5 phr when the copolymer is composed of 80 wt.% of ethylene and 20 wt.% of acrylic acid.

To further improve the performance of the film in packaging operation, the second face of the film, i.e., other than the face coated with the composition of this invention, may be coated with a composition comprising a terpolymer of 2 to 15 wt.% of acrylic or methacrylic acid, 10 to 80 wt.% of methyl or ethyl acrylate, and 10 to 80 wt.% of methyl methyacrylate, together with colloidal silica and carnauba wax, as described in Patent No. 3,753,769. Such coating has the effect of reducing the coefficient of friction and slip and also improving the ink adhesion of that surface of the film.

Before applying the coating composition to the appropriate substrate, the surface of the substrate film can be treated to insure that the coating will be strongly adherent to the film thereby eliminating the possibility of the coating peeling or being stripped from the film. This treatment can be accomplished by employing known prior art techniques such as, film chlorination, i.e., exposure of the film to gaseous chlorine, treatment with oxidizing agents such as chromic acid, hot air or steam treatment and flame treatment. Although any of these techniques can be effectively employed to pretreat the film surface, a particularly desirable method of treatment is the so-called electronic treatment method which comprises exposing the film surface to a high voltage corona discharge while passing the film between a pair of spaced electrodes. After electronic treatment of the substrate film surface, it can be coated with the coating composition of the present invention which coating will then exhibit a tendency to more strongly adhere to the treated film surface.

In applications where even greater coating-to-film adherence is desired, i.e., greater than that resulting from treatment of the film surface by any of the previously described methods, an intermediate primer coating can be employed. In this case, the film is first treated by one of the foregoing methods, electronic treatment being a preferred method, to provide increased active adhesive sites thereon (thereby promoting primer adhesion) and to the thus-treated film surface there is subsequently applied a continuous coating of a primer material. Primer materials which are suitable are well known in the art and include, for example, titanates and poly(ethylene imine). The primer is applied to the electronically treated base film by conventional solution coating means. A particularly effective primer herein is poly(ethylene imine) applied as either an aqueous or organic solvent solution, e.g., of ethanol, containing about 0.5 wt.% of the poly(ethylene imine).

The coating composition is applied to the treated surface of the polymer film in any suitable manner such as by gravure coating, roll coating, dipping or spraying. The excess aqueous solution can be removed by squeeze rolls or doctor knives. The coating composition will ordinarily be applied in such an amount that there will be deposited following drying, a smooth, evenly distributed layer of from 5 × 10⁻⁷ to 2.5 × 10⁻⁶m(0.02 to 0.10 mil) thickness. In general, the thickness of the applied coating is such that it is sufficient to impart the desired sealability, coefficient of friction (COF), and hot slip characteristics to the substrate polymer film.

The coating once applied to the film is subsequently dried by hot air, radiant heat or by any other suitable means thereby providing a non-water soluble, clear, adherent, glossy coated film product useful, for example, as a packaging film.

The following examples further illustrate the invention.

### Examples 1-33

Thirty-three coating compositions were prepared by adding to an aqueous solution or fine dispersion of 25 wt.% of an ammonium salt of a copolymer of 80 wt.% of ethylene and 20 wt.% of acrylic acid, sold by Michelman as Primacor 4983 (RTM), varying amounts of sodium hydroxide (NaOH), poly(oxymethylene) sorbitan monooleate anti-static agent (A-S), sold as Glycosperse 0-20(RTM), microcrystalline wax having an average size of about 0.12 to 0.2 µm (MWX) sold by Michelman as 41540(RTM), and melamine-formaldehyde cross-linking agent (M-F) sold as Cymel 385(RTM). In addition, 0.4 phr of talc and 0.1 phr of fumed silica having an average particle size of 3 to 5 µm sold as Syloid 72(RTM) were also added to each composition. All the components were added as an aqueous disperson or solution except the anti-static agent which was added as a pure liquid. Water was then added to bring the final coating composition to a solids content (% SOL) of between 11 and 15 wt.%.

Each of the foregoing coating compositions was applied to one surface of coextruded, three layer, biaxially oriented polypropylene film samples having a total thickness of about 2.3 × 10⁻⁵ m(0.9 mil). The polymer of the core layer of each film was a polypropylene homopolymer having a high isotactic content and a melt index of about 3.0, and such core layer was about 2.2 × 10⁻⁵m(0.856 mil) in thickness. The polymer of the outer layers was an isotactic copolymer of propylene and about 3.55 wt.% of ethylene, based on the weight of the copolymer, having a melt index of about 6.8. The thickness of each of the outer layers was about 5 × 10⁻⁷m(0.022 mil).

The other surface of each of the thirty-three film samples was coated with a composition comprising a terpolymer of methyl methacrylate, methyl acrylate and methacrylic acid, colloidal silica, and carnauba wax, with a total solids content of about 13 wt.% as described in U.S. Patent No. 3,753,769.

The coatings were applied utilizing standard gravure coating apparatus and techniques. Before coating, the film had been treated by subjecting both surfaces thereof to electronic treatment and priming the electronically treated surfaces with a 0.5 wt.% solution of poly(ethylene imine) in a mixture of 85 percent water and 15 percent ethanol. The total coating weight on the oriented, treated, primed film surface following drying of the film was from about 0.5 to 0.9 gram 0.6451 m²(1,000 in. ²)of film, on the surfaces coated with the composition of this invention, and about 0.76 gram 0.6451 m²(1000 in.²) of film on the surfaces coated with the composition of U.S. Patent No.3,753,769.

The amounts of additives in phr which were varied in the coating compositions as well as the solids content of each composition and the drying temperature of the coating in degrees C(F) (TEMP.), are shown in Table I.

**Table I**

| Example | NaOH | A-S | MWX | M-F | %SOL | TEMP. |
|---|---|---|---|---|---|---|
| 2 | 1.5 | 3 | 7 | 3 | 12 | 116(240) |
| 3 | 1.5 | 1 | 5 | 3 | 12 | 104(220) |
| 4 | 1.5 | 3 | 5 | 9 | 14 | 116(240) |
| 5 | 4.5 | 3 | 5 | 3 | 14 | 104(220) |
| 6 | 1.5 | 1 | 7 | 9 | 14 | 104(220) |
| 7 | 4.5 | 1 | 5 | 9 | 12 | 116(240) |
| 8 | 4.5 | 1 | 7 | 9 | 12 | 104(220) |
| 9 | 4.5 | 3 | 7 | 9 | 12 | 104(220) |
| 10 | 3.0 | 2 | 6 | 6 | 13 | 110(230) |
| 11* | 0.0 | 2 | 6 | 6 | 13 | 110(230) |
| 12 | 6.0 | 2 | 6 | 6 | 13 | 110(230) |
| 13 | 3.0 | 2 | 6 | 6 | 11 | 110(230) |
| 14 | 3.0 | 2 | 6 | 6 | 15 | 110(230) |
| 15 | 3.0 | 2 | 6 | 6 | 13 | 99(210) |
| 16 | 3.0 | 2 | 6 | 6 | 13 | 121(250) |
| 17 | 3.0 | 0 | 6 | 6 | 13 | 110(230) |
| 18 | 3.0 | 4 | 6 | 6 | 13 | 110(230) |
| 19 | 3.0 | 2 | 4 | 6 | 13 | 110(230) |
| 20 | 3.0 | 2 | 8 | 6 | 13 | 110(230) |
| 21 | 3.0 | 2 | 6 | 0 | 13 | 110(230) |
| 22 | 3.0 | 2 | 6 | 12 | 13 | 110(230) |
| 23 | 3.0 | 2 | 6 | 6 | 13 | 110(230) |
| 24 | 3.0 | 2 | 6 | 6 | 13 | 110(230) |
| 25 | 4.5 | 1 | 5 | 9 | 14 | 104(220) |
| 26 | 4.5 | 3 | 7 | 9 | 14 | 116(240) |
| 27 | 4.5 | 1 | 7 | 3 | 12 | 104(220) |
| 28 | 1.5 | 1 | 7 | 9 | 12 | 116(240) |
| 29 | 1.5 | 1 | 5 | 3 | 14 | 116(240) |
| 30 | 1.5 | 3 | 5 | 9 | 12 | 104(220) |
| 31 | 1.5 | 3 | 7 | 3 | 14 | 104(220) |
| 32 | 4.5 | 3 | 5 | 3 | 12 | 116(240) |
| 33 | 3.0 | 2 | 6 | 6 | 13 | 110(230) |

| | | | | | | |
|---|---|---|---|---|---|---|
| * Comparative | | | | | | |

The coated films of these examples were tested for various properties, the following of which with the indicated headings are shown in Table II. The non-crimp seal strengths in Tables II and III were measured with a Suter tester or tensile tester on seals made with an Askco nine station heat sealer at 0.34 atm(5 psi) and 2 s dwell time at temperatures varied from 93°C to 138°C(200°F to 280°F).

MST - The temperature in°C(°F)to reach 39.4g/cm(100 gm/in)seal strength.

DELTA - The temperature increase to raise the seal strength from 39.4 to 118.1 g/cm,°C(100 to 300 gm/in, °F)

SS - The average of seal strength measured at 126.7,132.2 and 137.8°C,g/cm (260, 270 and 280° F, gm/in).

COF - The coefficient of friction determined with an Imass slip/peel tester which has a 6.35cm × 6.35 cm(2½in. × 2½in.), 200 gram sled with ASTM approved rubber on the bottom, traveling at 15.24cm/min (6 in/min). (ASTM D1894).

BL - The blocking in g/cm(gm/in.) after one hour at 60°C(140°F)and 51.04 atm(750 psi) of the coated side of the invention to the coated side of the invention of each film, measured by peeling samples apart on a tensile tester.

HAZE - The percent haze on the seal coating determined by the Gardner hazemeter, which measures the percentage of light transmitted through a film which deviates from the incident beam as a result of forward scattering (ASTM D1003).

**Table II**

| Example | MST | Delta | SS | COF | BL | Haze |
|---|---|---|---|---|---|---|
| 1 | 101(214) | 5.7(10) | 230(585) | 0.38 | 2.3(5.8) | 1.6 |
| 2 | 96(204) | 7.3(14) | 267(678) | 0.44 | 3.3(8.4) | 1.7 |
| 3 | 94(201) | 7.1(13) | 235(598) | 0.38 | 3.1(7.9) | 1.4 |
| 4 | 94(202) | 5.4(8) | 257(652) | 0.40 | 3.8(9.7) | 1.4 |
| 5 | 101(214) | 6.2(11) | 242(615) | 0.41 | 2.4(6.2) | 1.7 |
| 6 | 95(203) | 5.4(8) | 200(508) | 0.38 | 3.3(8.4) | 1.6 |
| 7 | 106(223) | 6.8(12) | 217(552) | 0.37 | 2.1(5.4) | 1.5 |
| 8 | 107(224) | 6.2(11) | 228(580) | 0.38 | 2.2(5.5) | 1.9 |
| 9 | 107(224) | 10(18) | 212(538) | 0.34 | 2.9(7.4) | 1.7 |
| 10 | 101(213) | 5(9) | 226(575) | 0.54 | 2.7(6.9) | 1.4 |
| 11* | 89(192) | 4(7) | 213(540) | 0,58 | 16.1(40.8) | 1.9 |
| 12 | 113(235) | 9(17) | 150(382) | 0.36 | 2.9(7.4) | 1.6 |
| 13 | 101(214) | 6.2(11) | 192(488) | 0.40 | 2.4(6.1) | 1.2 |
| 14 | 101(213) | 5.7(10) | 226(573) | 0.37 | 2.8(7.2) | 1.4 |
| 15 | 96(204) | 6.8(12) | 188(477) | 0.36 | 2.5(6.4) | 1.3 |
| 16 | 101(213) | 5.7(10) | 233(593) | 0.43 | 2.3(5.9) | 1.4 |
| 17 | 101(213) | 3(6) | 212(538) | 0.39 | 2.3(6.0) | 1.4 |
| 18 | 101(213) | 6.2(11) | 234(595) | 0.42 | 2.6(6.6) | 1.4 |
| 19 | 100(212) | 3.9(7) | 192(488) | 0,35 | 2.0(7.2) | 1.2 |
| 20 | 102(216) | 5(9) | 247(628) | 0,35 | 2.2(5.5) | 1.6 |
| 21 | 94(202) | 3.9(7) | 192(488) | 0.38 | 2.8(7.1) | 1.4 |
| 22 | 101(214) | 5.7(10) | 234(595) | 0.36 | 2.3(5.9) | 1.4 |
| 23 | 101(213) | 3.9(7) | 189(480) | 0.36 | 2.4(6.0) | 1.3 |
| 24 | 102(216) | 6.2(11) | 233(592) | 0.36 | 2.4(6.0) | 1.5 |
| 25 | 107(224) | 5.7(10) | 193(490) | 0.38 | 2.5(6.3) | 1.6 |
| 26 | 113(236) | 6.2(11) | 180(457) | 0.35 | 2.0(5.1) | 1.6 |
| 27 | 104(220) | 5.4(8) | 180(457) | 0.31 | 2.9(7.3) | 1.7 |
| 28 | 97(206) | 9(17) | 187(475) | 0.38 | 3.0(7.6) | 1.5 |
| 29 | 91(195) | 6.2(11) | 237(602) | 0.38 | 4.2(10.6) | 1.6 |
| 30 | 95(203) | 5.7(10) | 154(392) | 0.43 | 4.1(10.3) | 1.4 |
| 31 | 89(193) | 6.2(11) | 182(462) | 0.45 | 4.2(10.7) | 1.5 |
| 32 | 106(222) | 5,4(8) | 209(530) | 0.42 | 2.1(5.4) | 1.4 |
| 33 | 101(214) | 6.2(11) | 180(457) | 0.32 | 2.4(6.1) | 1.5 |

| | | | | | | |
|---|---|---|---|---|---|---|
| * comparative | | | | | | |

The following additional properties with the indicated headings, are shown in Table III, wherein crimp seal strengths were measured on crimp seals made with a Wrap Ade crimp sealer at 1.4 atm(20 psi) and 3/4 s, having a jaw configuration similar to that of a Campbell wrapper (horizontal form and fill).

HT - The hot tack of the coating as an average of values obtained at 93,104,116 and 127°C, g/cm(200, 220, 240 and 260°F, gm/in.), measured using calibrated springs which subject heat sealed samples to known forces immediately after crimp seals are made.

CR-MST - The crimp seal temperature to obtain 39.4 g/cm(100 gm/in) seal strength,°C(°F).

CRDL - The temperature increase to raise the crimp seal strength from 39.4 to 118.1g/cm,°C(100 to 300 gm/in, °F).

CRIMP - The crimp seal strength average of 116,127 and 138°C, g/cm(240, 260 and 280°F, gm/in).

SS-H₂O- The average seal strength at 127,132 and 138°C (260, 270 and 280°F) after 24 hour water immersion at room temperature,g/cm(gm/in).

D-MST - The temperature needed to obtain a 78.7g/cm (200 gm/in) seal on the trailing edge of the crimp seal on the Doboy HFFS machine running at 45.7 mpm(150 fpm).

**Table III**

| Ex. | HT | CR-MST | CRDL | CRIMP | SS-H₂O | D-MST |
|---|---|---|---|---|---|---|
| 1 | 37(95) | 78(173) | 5(9) | 242(614) | 118(299) | 113(235) |
| 2 | 19(49) | 77(170) | 4(7) | 267(679) | 154(390) | 103(217) |
| 3 | 19(49) | 73(163) | 8(14) | 244 (619) | 141 (359) | 100(212) |
| 4 | 19(49) | 82(179) | 4(8) | 261(664) | 156(396) | 101(214) |
| 5 | 74(188) | 78(173) | 8(13) | 243(616) | 106(270) | 124(255) |
| 6 | 19(49) | 77(170) | 7(13) | 241(613) | 138(351) | 102(216) |
| 7 | 74(188) | 86(187) | 8(15) | 258(654) | 91(231) | 136(276) |
| 8 | 79(200) | 83(181) | 5(10) | 260(661) | 126(319) | 134(273) |
| 9 | 56(142) | 86(187) | 6(11) | 257 (652) | 74(189) | 141 (285) |
| 10 | 43(108) | 78(172) | 3(6) | 260(660) | 170(432) | 114(238) |
| 11* | 8(20) | 63(146) | 10(18) | 244(619) | 197(500) | 95(203) |
| 12 | 70(177) | 88(191) | 8(14) | 241(611) | 53(135) | 141(285) |
| 13 | 43(108) | 79(175) | 6(10) | 234(595) | 152(387) | 120(248) |
| 14 | 43(110) | 78(172) | 4(7) | 244(621) | 164(417) | 113(236) |
| 15 | 43(110) | 78(172) | 4(7) | 259(658) | 124(315) | 112(234) |
| 16 | 43(108) | 78(173) | 6(10) | 270(665) | 164(417) | 118(245) |
| 17 | 65(165) | 78(173) | 7(12) | 246(625) | 145(368) | 121(249) |
| 18 | 39(99) | 78(172) | 4(8) | 247(627) | 165(420) | 117(243) |
| 19 | 59(151) | 77(171) | 5(8) | 236(600) | 156(397) | 114(238) |
| 20 | 43(108) | 78(173) | 7(12) | 256(651) | 166(422) | 121(249) |
| 21 | 43(110) | 74(165) | 5(9) | 261(662) | 70(177) | 113(236) |
| 22 | 48(122) | 78(173) | 8(13) | 263(667) | 168(427) | 113(235) |
| 23 | 48(122) | 78(172) | 5(9) | 251(637) | 150(382) | 112(234) |
| 24 | 24(62) | 78(172) | 6(12) | 239(607) | 161(408) | 116(240) |
| 25 | 65(165) | 84(184) | 7(12) | 232(589) | 100(255) | 141(285) |
| 26 | 57(144) | 86(187) | 7(13) | 261(662) | 96(244) | 130(266) |
| 27 | 74(188) | 81(177) | 8(15) | 243(618) | 100(253) | 136(277) |
| 28 | 13(34) | 78(173) | 4(6) | 236(600) | 143(363) | 103(218) |
| 29 | 23(59) | 77(170) | 1(3) | 247(629) | 153(389) | 97(206) |
| 30 | 23(59) | 77(171) | 2(4) | 219(555) | 163(415) | 103(217) |
| 31 | 23(59) | 73(164) | 5(8) | 233(592) | 127(322) | 137(278) |
| 32 | 64(162) | 84(183) | 7(13) | 256(650) | 127(322) | 137(278) |
| 33 | 43(108) | 78(173) | 6(10) | 222(565) | 156(397) | 116(241) |

| | | | | | | |
|---|---|---|---|---|---|---|
| * comparative | | | | | | |

The product and process conditions shown in Table I and the values of properties shown in Tables II and III indicate that the coated films of this invention have good hot tack and blocking properties accompanied by satisfactory low temperature sealing and good resistance of the seal to immersion in water. Furthermore, the improved hot tack and blocking obtained provide for the feeding of thicker coated films to high speed HFFT machines and somewhat lower speed VFFT machines without any tearing of the film.

## Claims

1. A base polymer film coated with a composition comprising an ethylene copolymer comprising 65 to 95 wt.% ethylene and 5 to 35 wt.% of acrylic or methacrylic acid based on the weight of the polymer, wherein 2 to 80% of the carboxylate groups are neutralized with metal ions from Groups Ia, IIa, or IIb of the Periodic Table, and microcrystalline wax and/or fumed silica.

2. A coated film according to claim 1 wherein the base polymer film comprises oriented isotactic polypropylene.

3. A coated film according to claim 1 or 2 wherein the base polymer film is a multilayer film in which at least one layer comprises isotactic polypropylene homopolymer and at least one outer layer comprises a copolymer of propylene and a minor amount of one or more other 1-olefins.

4. A coated film according to any preceding claim wherein the base polymer film is a three layer film in which the central core layer comprises isotactic polypropylene homopolymer and the outer layers, which may be the same or different, comprise an isotactic copolymer of propylene and ethylene or isotactic terpolymer of propylene, ethylene and butylene.

5. A coated film according to claim 4 wherein the central core layer comprises an opaque isotatic polypropylene homopolymer containing voids.

6. A coated film according to claim 5 wherein the base polymer film is a five layer film in which the central core layer comprises an opaque isotactic polypropylene homopolymer containing voids; the layers contiguous to the central core layer, which may be the same or different, comprise isotactic polypropylene homopolymer without voids; and the outer layers, which may be the same or different comprise an isotactic copolymer of propylene and ethylene or isotactic terpolymer of propylene, ethylene and butylene.

7. A coated film according to any preceding claim wherein the ethylene copolymer comprises 75 to 85 wt.% of ethylene and 15 to 25 wt.% or acrylic or methacrylic acid.

8. A coated film according to any preceding claim wherein 10 to 50% of the carboxylate groups of the ethylene copolymer are neutralized.

9. A coated film according to claim 8 wherein the neutralisation is effected with sodium, potassium, calcium or zinc ions.

10. A coated film according to any preceding claim wherein the coating comprises microcrystalline wax and fumed silica.

11. A coated film according to any preceding claim wherein the microcrystalline wax is present in an amount from 2 to 12 phr and has an average particle size from 0.1 to 0.6 µm.

12. A coated film according to any preceding claim wherein the fumed silica is present in an amount of from 0.1 to 2.0 phr and has an average agglomerated particle size from 2 to 9 µm.

13. A coated film according to any preceding claim wherein the composition is cross-linked by a cross-linking agent in an amount of up to 20 phr.

14. A composition comprising A) an ethylene copolymer comprising 65 to 95 wt.% ethylene and 5 to 35 wt.% of acrylic or methacrylic acid based on the weight of the polymer, wherein 2 to 80% of the carboxylate groups are neutralized with metal ions from Groups Ia, IIa or IIb of the Periodic Table; B) microcrystalline wax; and C) fumed silica.

15. Use of a composition according to claim 14 to coat a base polymer film.

## Patentansprüche

1. Basispolymerfolie, beschichtet mit einer Zusammensetzung, die ein Ethylencopolymer, das bezogen auf das Gewicht des Polymers 65 bis 95 Gew.-% Ethylen und 5 bis 35 Gew.-% Acryl- oder Methacrylsäure umfaßt, wobei 2 bis 80% der Carboxylatgruppen mit Metallionen aus den Gruppen Ia, IIa oder IIb des Periodensystems neutralisiert sind, und mikrokristallines Wachs und/oder Quarzstaub umfaßt.

2. Beschichtete Folie nach Anspruch 1, wobei die Basispolymerfolie orientiertes, isotaktisches Polypropylen umfaßt.

3. Beschichtete Folie nach Anspruch 1 oder 2, wobei die Basispolymerfolie eine mehrschichtige Folie ist, bei der mindestens eine Schicht ein isotaktisches Polypropylen-Homopolymer umfaßt und mindestens eine Außenschicht ein Copolymer von Propylen und einer geringen Menge von einem oder mehreren anderen 1-Olefinen umfaßt.

4. Beschichtete Folie nach einem der vorstehenden Ansprüche, wobei die Basispolymerfolie eine dreischichtige Folie ist, bei der die mittlere Kernschicht ein isotaktisches Polypropylen-Homopolymer umfaßt und die Außenschichten, die gleich oder verschieden sein können, ein isotaktisches Copolymer von Propylen und Ethylen oder ein isotaktisches Terpolymer von Propylen, Ethylen und Butylen umfassen.

5. Beschichtete Folie nach Anspruch 4, wobei die mittlere Kernschicht ein undurchsichtiges, isotaktisches Polypropylen-Homopolymer umfaßt, das Hohlräume enthält.

6. Beschichtete Folie nach Anspruch 5, wobei die Basispolymerfolie eine fünfschichtige Folie ist, bei der mittlere Kernschicht ein undurchsichtiges, isotaktisches Polypropylen-Homopolymer umfaßt, das Hohlräume enthält, die an die mittlere Kernschicht angrenzenden Schichten, die gleich oder verschieden sein können, ein isotaktisches Polypropylen-Homopolymer ohne Hohlräume umfassen, und die Außenschichten, die gleich oder verschieden sein können, ein isotaktisches Copolymer von Propylen und Ethylen oder ein isotaktisches Terpolymer von Propylen, Ethylen und Butylen umfassen.

7. Beschichtete Folie nach einem der vorstehenden Ansprüche, wobei das Ethylencopolymer 75 bis 85 Gew.-% Ethylen und 15 bis 25 Gew.-% Acryl- oder Methacrylsäure umfaßt.

8. Beschichtete Folie nach einem der vorstehenden Ansprüche, wobei 10 bis 50% der Carboxylatgruppen des Ethylencopolymers neutralisiert sind.

9. Beschichtete Folie nach Anspruch 8, wobei das Neutralisieren mit Natrium-, Kalium-, Calcium- oder Zinkionen erfolgt ist.

10. Beschichtete Folie nach einem der vorstehenden Ansprüche, wobei die Beschichtung mikrokristallines Wachs und Quarzstaub umfaßt.

11. Beschichtete Folie nach einem der vorstehenden Ansprüche, wobei das mikrokristalline Wachs in einer Menge von 2 bis 12 phr vorhanden ist und eine mittlere Partikelgröße von 0,1 bis 0,6 µm hat.

12. Beschichtete Folie nach einem der vorstehenden Ansprüche, wobei der Quarzstaub in einer Menge von 0,1 bis 2,0 phr vorhanden ist und eine mittlere Größe der agglomerierten Partikel von 2 bis 9 µm hat.

13. Beschichtete Folie nach einem der vorstehenden Ansprüche, wobei die Zusammensetzung mit einem Vernetzungsmittel in einer Menge von bis zu 20 phr vernetzt ist.

14. Zusammensetzung, welche umfaßt: A) ein Ethylencopolymer, das bezogen auf das Gewicht des Polymers 65 bis 95 Gew.-% Ethylen und 5 bis 35 Gew.-% Acryl- oder Methacrylsäure umfaßt, wobei 2 bis 80% der Carboxylatgruppen mit Metallionen aus den Gruppen Ia, IIa oder IIb des Periodensystems neutralisiert sind, B) mikrokristallines Wachs und C) Quarzstaub.

15. Verwendung einer Zusammensetzung nach Anspruch 14 zum Beschichten einer Basispolymerfolie.

## Revendications

1. Un film de polymère de base revêtu d'une composition comprenant un copolymère d'éthylène comprenant 65 à 95% en poids d'éthylène, et 5 à 35% en poids d'acide acrylique ou méthacrylique, exprimés par rapport au poids du polymère, dont 2 à 80% des groupes carboxyliques sont neutralisés par des ions de métal des groupes Ia, IIa, ou IIb du tableau périodique, et de la cire microcristalline et/ou de la silice fumée.

2. Un film de revêtement selon la revendication 1, dans lequel le film de polymère de base comprend du polypropylène isotactique orienté.

3. Un film de revêtement selon la revendication 1 ou 2, dans lequel le film de polymère de base est un film multicouche dont au moins l'une des couches comprend un homopolymère de polypropylène isotactique, et au moins une couche extérieure comprend un copolymère de propylène et d'une quantité mineure d'une ou plusieurs autres 1-oléfines.

4. Un film revêtu selon une quelconque des revendications précédentes, dans lequel le film de polymère de base est un film à trois couches dont la couche de coeur centrale comprend un homopolymère de polypropylène isotactique et les couches extérieures, qui peuvent être identiques ou différentes, comprennent un copolymère isotactique de propylène et d'éthylène ou un terpolymère isotactique de propylène, éthylène et butylène.

5. Un film revêtu selon la revendication 4, dont la couche de coeur centrale comprend un homopolymère de polypropylène isotactique opaque contenant des lacunes.

6. Un film revêtu selon la revendication 5, dont le film de polymère de base est un film à cinq couches dont la couche de coeur centrale comprend un homopolymère de polypropylène isotactique opaque contenant des lacunes, et les couches contiguës à la couche de coeur centrale, qui peuvent être identiques ou différentes, comprennent de l'homopolymère de polypropylène isotactique sans lacunes et les couches extérieures, qui peuvent être identiques ou différentes, comprennent un copolymère isotactique de propylène et d'éthylène ou un terpolymère isotactique de propylène, éthylène et butylène.

7. Un film revêtu selon une quelconque des revendications précédentes, dans lequel le copolymère d'éthylène comprend 75 à 85% d'éthylène et 15 à 25% en poids d'acide acrylique ou méthacrylique.

8. Un film revêtu selon une quelconque des revendications précédentes, dans lequel 10 à 50% des groupes carboxyliques du copolymère d'èthylène sont neutralisés.

9. Un film revêtu selon la revendication 8, dans lequel la neutralisation est effectuée à l'aide d'ions sodium, potassium, calcium ou zinc.

10. Un film revêtu selon une quelconque des revendications précédentes, dans lequel le revêtement comprend de la cire microcristalline et de la silice fumée.

11. Un film revêtu selon une quelconque des revendications précédentes, dans lequel la cire microcristalline est présente à raison de 2 à 12 ppc et présente une dimension particulaire moyenne de 0,1 à 0,6 µm.

12. Un film revêtu selon une quelconque des revendications précédentes, dans lequel la silice fumée est présente à raison de 0,1 à 2,0 ppc en poids, et présentent une dimension moyenne de particule agglomérée de 2 à 9 µm.

13. Un film revêtu selon une quelconque des revendications précédentes, dans lequel la composition est réticulée par un agent réticulant en une quantité pouvant atteindre 20 ppc en poids.

14. Une composition comprenant A) un copolymère d'éthylène comprenant 65 à 95% en poids d'éthylène et 5 à 35% en poids d'acide acrylique ou méthacrylique. exprimés par rapport au poids du polymère, dont 2 à 80% des groupes carboxyliques sont neutralisés par un ion de métal des groupes Ia, IIa ou IIb du Tableau Périodique; B) de la cire microcristalline et; C) de la silice fumée.

15. Utilisation d'une composition selon la revendication 14 pour revêtir un film de polymère de base.
